# EUROPEAN PATENT APPLICATION

(11) **EP 1 156 442 A1**
(43) Date of publication of application: **21.11.2001**
(21) Application number: 99969934.1
(22) Date of filing: 10.03.1999
(51) Int. Cl.: G06F 19/00

(54) **IC CARD AND CONTROLLER, AND METHOD OF SELECTING APPLICATION FOR IC CARD**

(30) Priority: 06.10.1998 JP 28462198
(71) Applicant: FUJITSU LIMITED, Kawasaki-shi, Kanagawa 211-8588 (JP)
(72) Inventor: YANAGI, Ryoichi Fujitsu Limited, Kawasaki-shi,Kanagawa 211-8588 (JP)
(74) Representative: Stebbing, Timothy Charles
(86) International application number: JP9901152
(87) International publication number: WO0021016

(57) **Abstract**

Each application is provided with amounts and conditions for selection of applications, which are previously stored in an application selection table (22) of an IC card (100). Thereby, the amounts within predetermined ranges are corresponded to specific applications. The above IC card (100) performs automatic selection of applications corresponding to the amounts by an application selection section (23) based on amount information received from an external device.

## Description

### TECHNICAL FIELD

The present invention relates to an IC (integrated circuit) card and its controller, and a method for selection of IC card applications, which may prevent selection miss of applications without leaking of information on the applications under use to persons around the people concerned and have shorter operation time for monetary transaction operation.

### BACKGROUND ART

Recently, electronicmoney has attracted the attention of many people as new money in place of paper money. An IC card type of electronic money, among various types of the electronic money, has a feature that it is easily used, as it is used in a similar way to that of the current transactions (consumers carries cash in their purses). The IC card installs a one-chip microcomputer in a plastic card with a credit card size, as specified in standards such as ones by ISO (International Organization for Standardization), or JIS (Japanese Industrial Standard), and has a position as a portable container of the electronic money. The one-chip microcomputer comprises a CPU (central processing unit) and EEPROM (Electrically Erasable and Programmable Read Only Memory) . The EEPROM stores data for the electronic money in an encrypted form; data for so-called electronic signoff to prevent copying and falsifying of the electronic money dada; and so on. That is, the electronic money itself is protected.

Moreover, the IC card type of electronic money may be classified into an open type and a closed type, depending on electronized money or electronized settlement. The electronized money is an open type of electronic money which has a similar property to that of the current cash, and is distributed among peoples without passing through settlement organizations such as banks for each settlement. On then other hand, the electronized settlement is a closed type of electronic money which has an advantage for compensation at losing the money as use histories may be obtained, though it may not be transferred without passing through bank accounts, as it is returned to the credit company as an issuing agent whenever it is used. Hereinafter, it is assumed that the open type of electronic money is called as "cash type", and the closed type one as "credit type", considering the difference in the distribution forms.

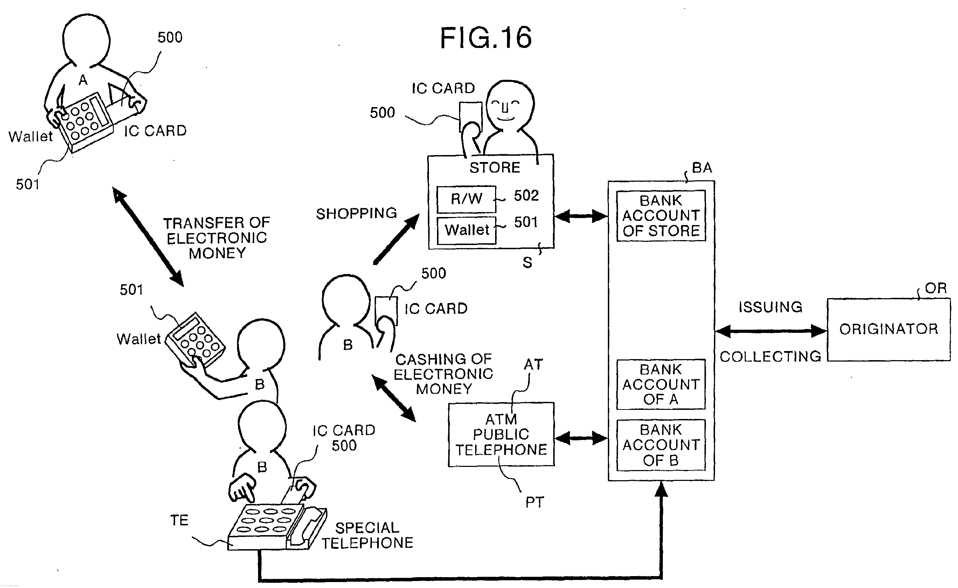

Fig. 16 shows an explanatory and schematic view of a cash type system. Users (for example, consumers, and store owners) have own IC cards 500, respectively. The IC card 500 is provided with an IC having an area of about 20 square millimeters. A CPU used for the IC is a simple and cheap one, comprising a simple logical circuit of about eight bits. Moreover, EEPROM is used as a memory means.

Further, if electronic money is assumed to be cash, a wallet 501 equals to a purse for the cash. The wallet 501 has a form like an electronic calculator, and an entry for an interface with the IC card 500. The wallet 501 is provided with a liquid crystal display part for confirmation of the balance, transaction information and so on. Each user has its own wallet 501.

When a user B visits a store S with the IC card 500 for shopping, and performs payment, using the electronic money. The store S is provided with a reader/writer (hereinafter, called as R/W) 502 for the IC card 500. Insertion of the IC card 500 into the R/W 502 enables the payment by the electronic money. In the IC card 500, the payment amount is subtracted form the electronic money, and in the R/W 502, the payment amount is added to the electronic money.

Same procedure is followed when making through the wallet 501 of a store owner, instead of R/W 502. Moreover, the electronic money may be transferred between a user A and the user B (for example, between the friends, and between parents and children). As mentioned above, the cash type system is characterized in that the electronic money is transferred like actual money.

The user B draws the electronic money from his/her own bank account through a special telephone TE, a pay phone PT, or ATM (automatic teller machine) (AT), which are connected on-line to his/her bank BA, in order to charge the IC card with the electronic money. The his/her bank BA receives the issued electronic money from an originator OR, which is an issuing body of the electronic money, in exchange for cash.

Here, the special telephone TE transfers the electronic money from his/her own bank account to the IC card 500, and sends the electronic money in the IC card 500. And, the store owner may transfer the sales amount on-line to the bank account of the store owner. The above is applied to the users A and B, similarly.

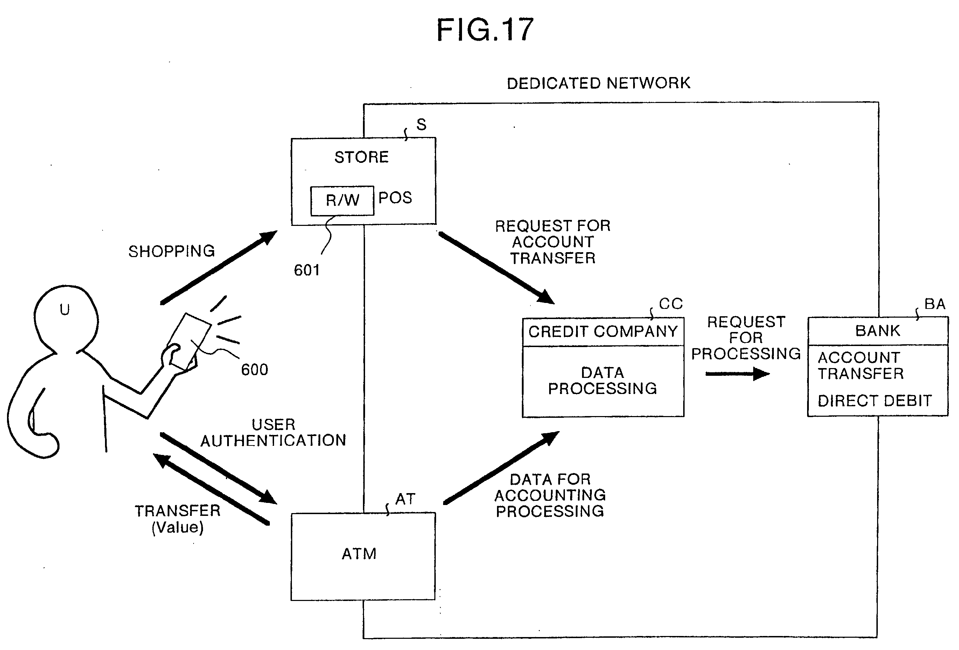

The "credit type" system is credit company directed electronic money. Fig. 17 shows a schematic view of a credit type system. When a user U charges the IC card with electronic money, an IC card 600 is inserted into an ATM (AT) for authentication of the identical user, in the first place. After completion of the authentication, the electronic money is transferred to the IC card 600, and data for accounting operation is sent from the ATM (AT) to a credit company CC.

Thereafter, the user U visits a store S with the IC card 600 for shopping. In such a case, the user U performs settlement, using the IC card 600. The amount of the electronic money charged in the IC card 600 is the limit for the shopping. The settlement is performed by operation of the IC card 600 of the user U by the R/W 601 of the store S.

Moreover, the R/W 601 is an authorization terminal, which is connected through a dedicated network to a bank BA. The store S requests the credit company CC to perform the account transfer, and then, the credit card company CC requests the bank BA to execute accounting, after completion of the data processing. Thereby, the price for the goods is deducted from the account of the user U, and credited to the account of the store owner.

Though a difference between the "cash type" and "credit type" systems is described above, a POS (point-of-sale) terminal, an IC card and so on, by which both the systems may be used, have been developed.

In such a case, selection of application is performed by verbal request of a user to a store associate. For example, when a user (customer) is asked, "which application would you like to select from the "cash type" and "credit type" systems?", the user may answer, for example, "Would like to select the "cash type" system." Then, the store associate operates a terminal for selection of the application of "cash type". After the selection, transactions are performed according to the application.

However, when selection of the applications is performed by verbal request to the store associate, there will be caused the following problems:

In the first place, information on the applications under use is leaked to customers (third party) around the user. In the electronic transactions, security control is very important, and it is required to prevent illegal transaction in which the third party performs illegal use of card information of the cardholder. It is preferable that information on applications under use is not leaked to the outside, as information on the applications under use is important card information.

In the second place, there is a possibility that the due applications are not selected due to mishearing, failure in operations, and so on, at the step of verbal request to a store associate, and the operation by the associate, if any request and operation.

In the third place, it takes long time to perform. Recently, non-stop collection of highway charges using the electronic money has been promoted for realization. However, prompt operation cannot be expected, when selection of the applications by the verbal request is performed at payment. The above is applied in a similar way to payment of fares for buses and railways.

The present invention has been made considering the circumstances. It is an object of the present invention is to provide an IC card, and its controller, and a method for selection of applications of the IC card, which meets the requirements to prevent leaking of information on the applications under use to persons around the people concerned and selection miss of applications, and have shorter operation time.

### DISCLOSURE OF THE INVENTION

In order to achieve the object, an IC card according to one aspect of the present invention comprises an interface unit which transmits and receives data to and from external devices; an application storage unitwhich stores a plurality of applications necessary for operations between external devices; an application selection table which stores applications and conditions for selection of each application in correspondence with each other; a condition identification unit which identifies data, which are conditions for selection, from data sent from the external devices; and an application selection unit which selects applications to be selected from identified conditions and the application selection table.

The application storage unit stores a plurality of applications necessary for operations between the external devices. The application selection table stores the applications, and conditions for selection of each application in correspondence with each other; the data to be conditions for selection is identified by the condition identification unit from the data sent from the external devices. The applications to be selected are selected from the identified conditions and data from the application selection table.

The IC card according to another aspect of the present invention comprises an interface unit which transmits and receives data to and from external devices; an application storage unit which stores a plurality of applications necessary for monetary transactions; an application selection table which stores applications and amount ranges to be used in correspondence with each other; a condition identification which identifies amount information sent from the external devices; and an application selection unit which selects applications in correspondence with the amount ranges including the identified amount information, based on the application selection table.

The application selection table is configured to select applications according to the amount ranges. In the first place, the amount information sent through the interface unit from the external devices is identified by the condition identification unit. After completion of identification of the amounts, collation of the amounts with the amount ranges in the application selection table is performed. For example, when a range is configured so that "cash type" is used in the case of payment of ¥5000 or less, and information that the amount is ¥1000 is received, an application of "cash type" is selected by the application selection unit.

Moreover, a controller according to the present invention is a controller used for the IC card storing a plurality of applications for execution of monetary transactions, and provided with an application selection table setting unit which gives the amount ranges used for selection of any one of the applications to IC cards for every application, wherein it is possible to select any one of the applications based on the amount information sent from an external device at the IC card side depending upon the amount range.

For example, in the case of payment by the electronic money in a store and so on, the payment is configured to be performed according to the applications which the store has joined. Moreover, when a plurality of applications are stored in the IC card side, the applications of the IC card side are required to be selected according to the applications of the store. If the IC card is provided with amount ranges for selection of applications, applications may be selected according to the amount ranges, when amount information is received from the outside. The amount ranges for such selection of the applications may not be set by the IC card itself without keys, dedicated input circuits, and a display part. Therefore, the amount ranges for selection of such applications are configured to be set by a controller. Moreover, the controller according to the present invention is provided further with an amount range judgment unit which detects blank ranges between the amount ranges, and contradictions between the amount ranges at provision of each application with the amount ranges.

If there are blank ranges between the amount ranges at setting of the amount ranges for each application, it is not possible to process the amount information corresponding to the blank regions. And if there are regions containing contradict parameters such as duplicated parts in the amount ranges, it is impossible to determine which applications should be selected. Therefore, it is configured to detect the blank ranges between the amount ranges, and the regions containing contradict parameters in the amount ranges . If there are detected any blank regions or regions containing contradict parameters, it is required to correct the amount ranges.

Moreover, the IC card according to the present invention comprises a collation extraction unit which performs collation of the application of the external devices with that of the IC card side, and to extract common applications; and an amount range adjustment unit which adjusts the amount ranges with which each extracted application is provided, and to eliminate the blank ranges between the amount ranges, wherein each of the extracted applications is configured to be provided with the amount range after the adjustment.

Generally, the applications which the store has joined is not always in coincidence with those under contract with the user. Therefore, even if the IC card is provided with amount ranges corresponding to applications, the user is finally required to give information on the applications to the store associate by verbal communication, when the applications can not be used at the store. Thereby, it is configured that common applications to the store side and the user side are previously extracted; and blank regions are eliminated by adjusting the parts which are caused in the amount ranges which have not been extracted. With the configuration, the user is not required to give information on the applications to the store associate by verbal communication.

Furthermore, a method for selecting applications of an IC card according to the present invention comprises the steps of previously provided amount ranges to be used with each application; identifying an amount information input by an external device by said IC card; and selecting specific applications based on the amount information and the amount ranges.

When the IC card stores a plurality of applications, it is required to select applications to be used for transaction from the applications. In the present invention, a plurality of applications previously stored are provided with amount ranges, respectively. When amount information is received from the external devices, for example, R/W, it is judged which part in each of the amount ranges the amount information is corresponding to. If the amount information is corresponding to one of the amount ranges, the applications corresponding to the amount ranges are configured to be selected.

Further, the method according to the present invention comprises the steps of collating of the applications of said external device with those of said IC card and thereby extracting common applications; adjusting the amount ranges with which each extracted application is provided, and to eliminate blank ranges between the amount ranges; and selecting the application.

Generally, the applications which the store has joined are not always in coincidence with those under contract with the user. Therefore, even if the IC card is provided with amount ranges corresponding to applications, the user is finally required to give information on the applications to the store associate by verbal communication, when the applications can not be used at the store. Thereby, it is configured that common applications to the store side and the user side are previously extracted, and blank regions are eliminated by adjusting the parts which are caused in the amount ranges which have not been extracted. With the configuration, the user is not required to give information on the applications to the store associate by verbal communication.

### BRIEF DESCRIPTION OF THE DRAWINGS

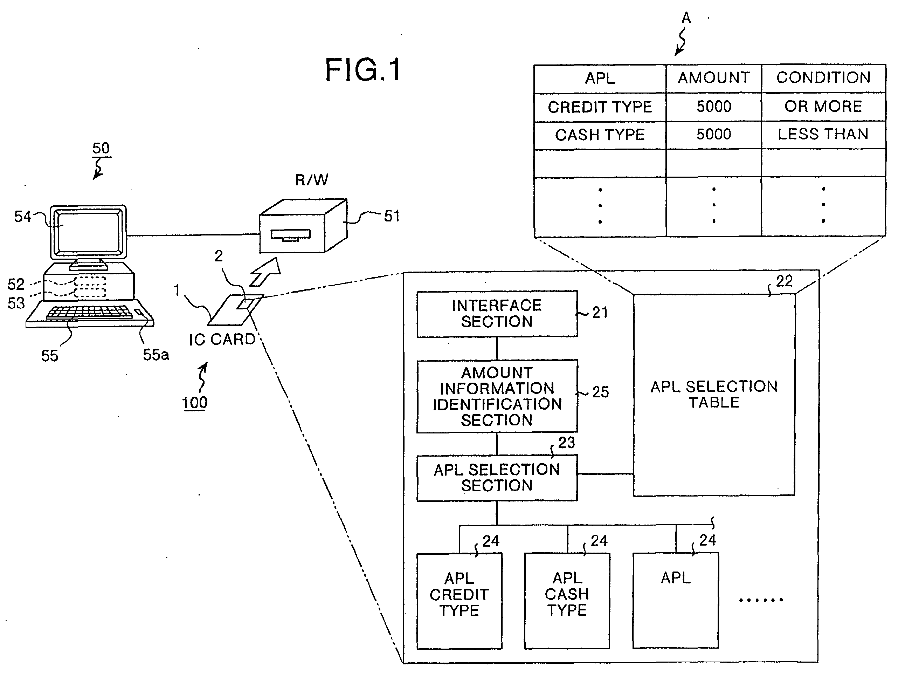

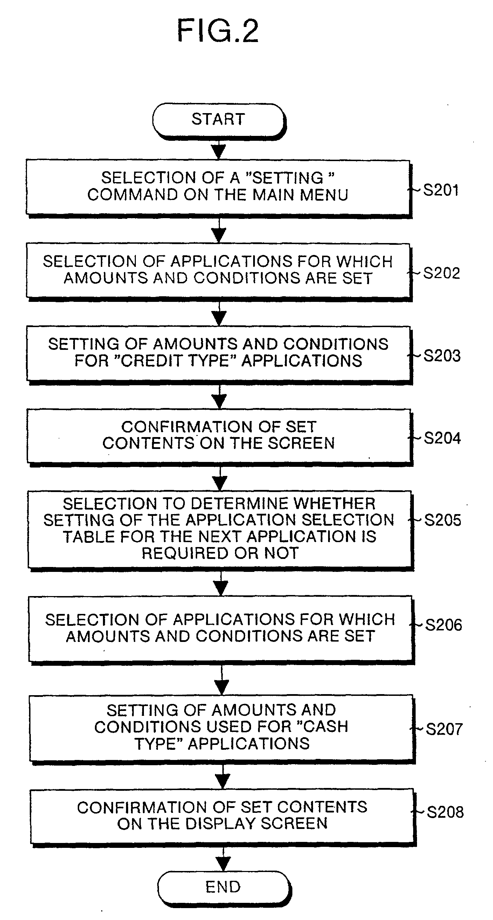

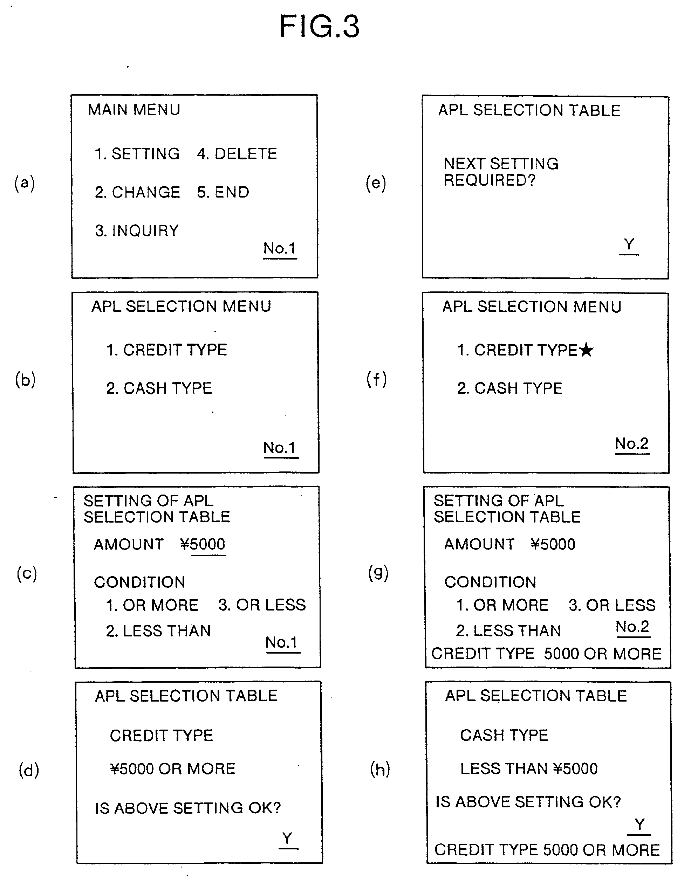

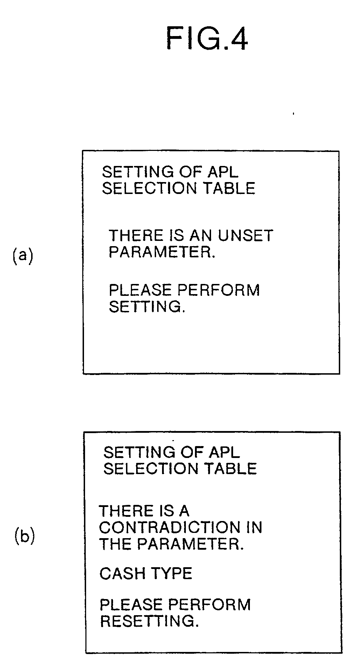

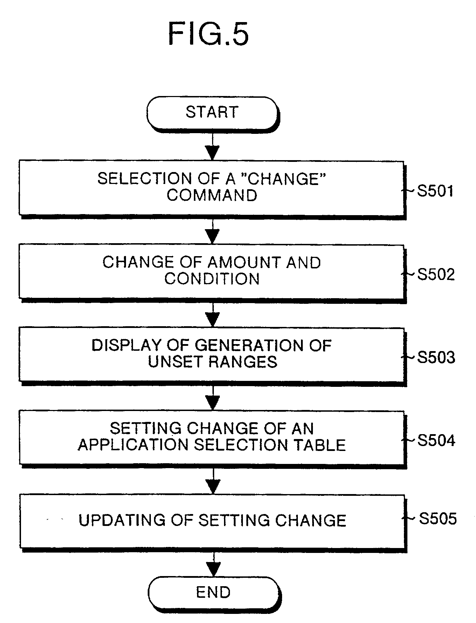

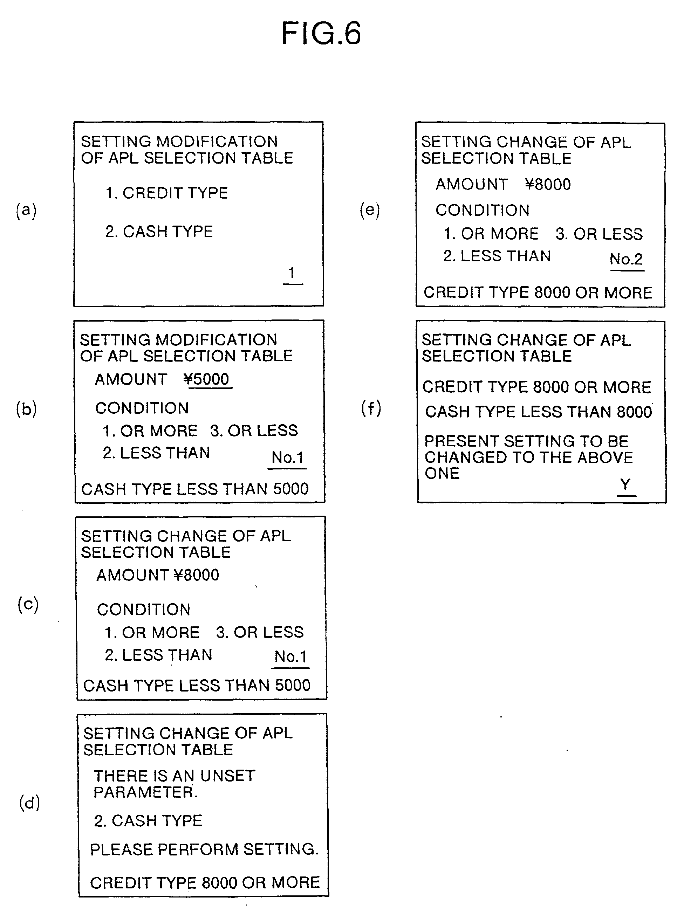

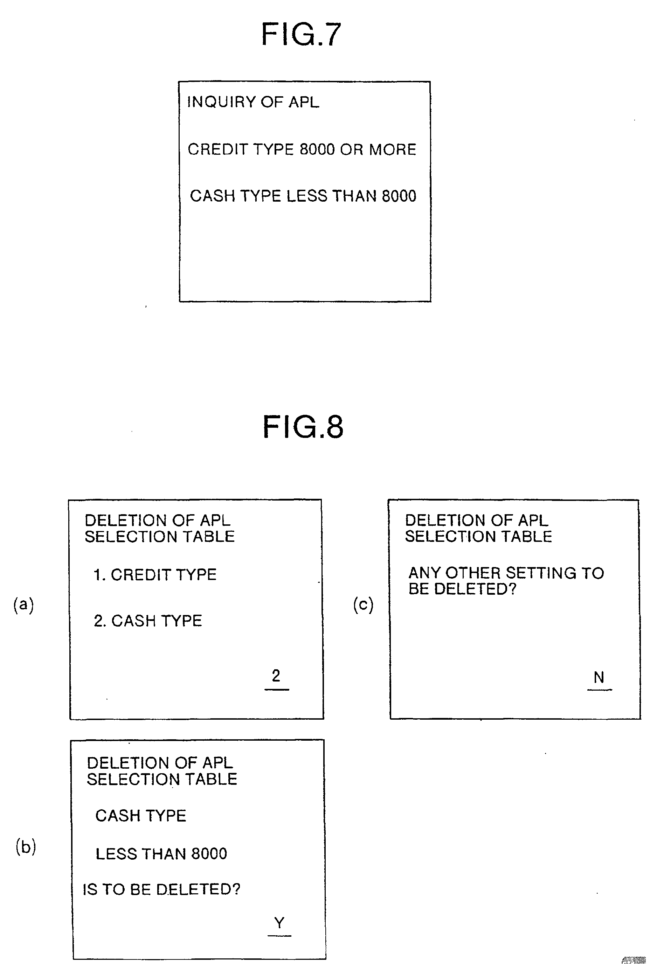

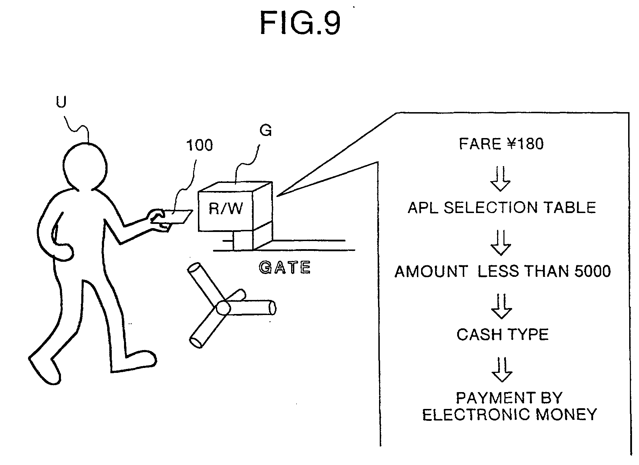

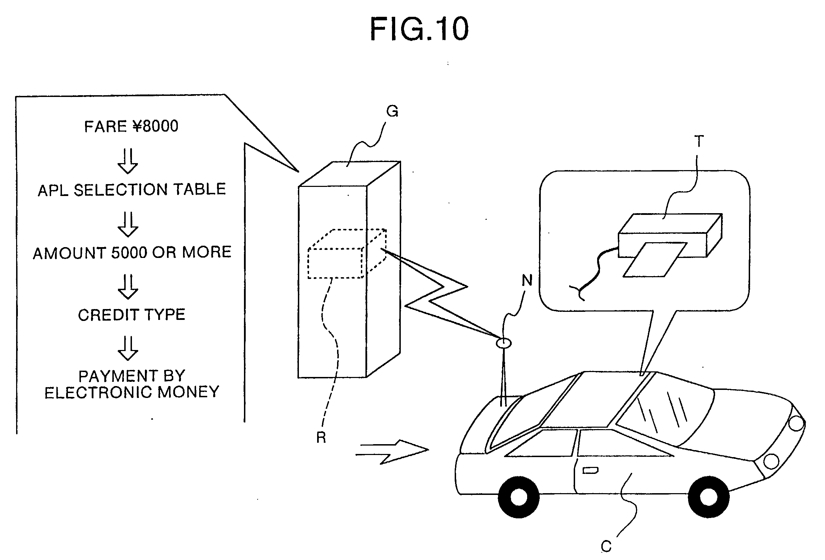

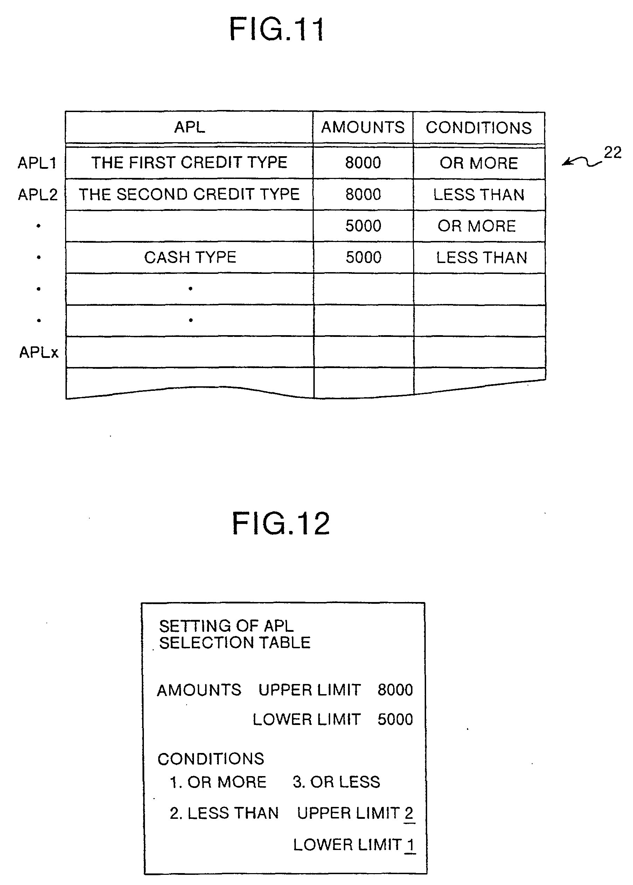

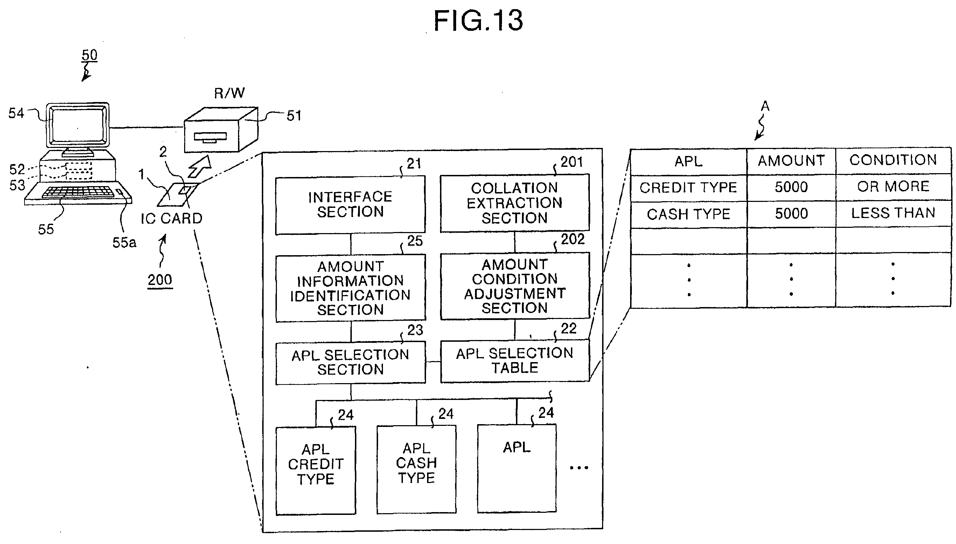

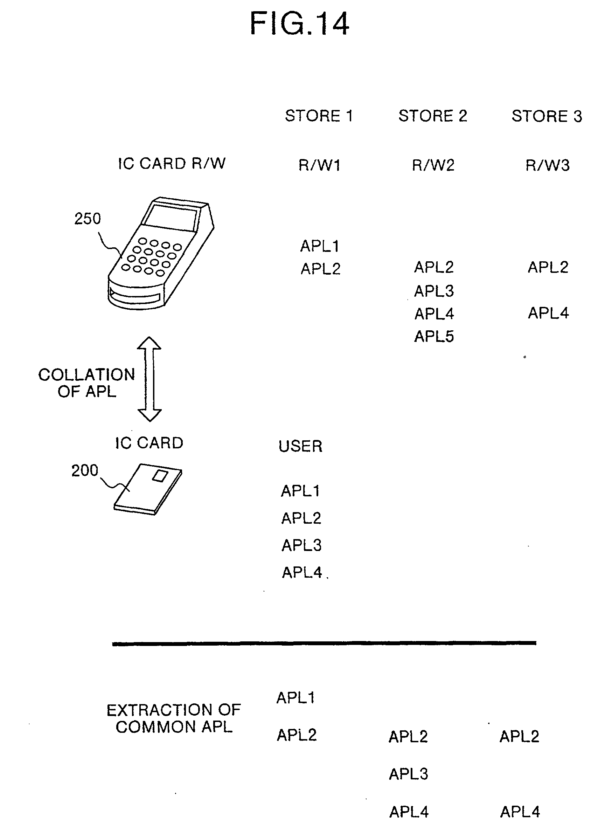

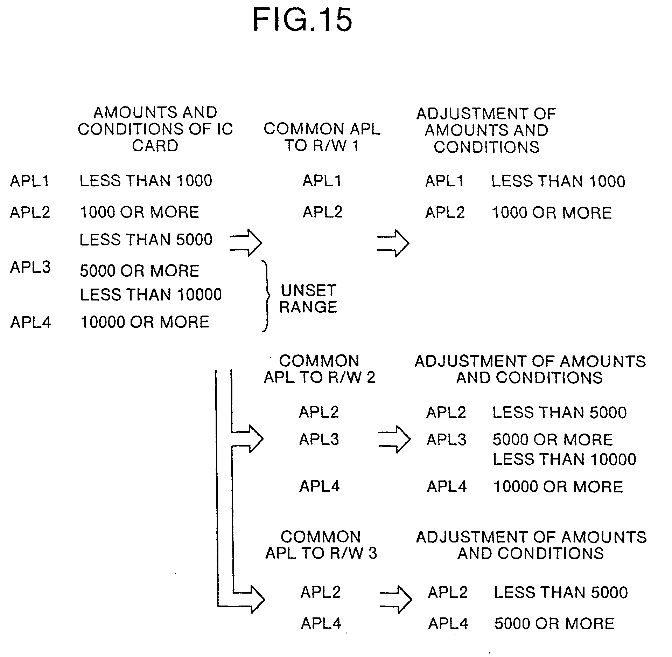

Fig. 1 shows an explanatory view of an IC card according to a first embodiment of the present invention; Fig. 2 shows a flow chart for setting operation of an application selection table; Fig. 3 shows an explanatory view of setting operation of an application selection table; Fig. 4 shows an explanatory view of setting operation of an application selection table; Fig. 5 shows a flow chart for setting change of an application selection table; Fig. 6 shows an explanatory view of setting change of an application selection table; Fig. 7 shows an explanatory view of inquiry of an application selection table; Fig. 8 shows an explanatory view of deletion of an application selection table; Fig. 9 shows an explanatory view of a case where payment of fares for railways is performed by using an IC card; Fig. 10 shows an explanatory view of a case where payment of highway charges is performed by using an IC card; Fig. 11 shows an explanatory view of a state of an application selection table in which there are three kinds of applications; Fig. 12 shows an explanatory view of setting operation of an application selection table; Fig. 13 shows an explanatory view of an IC card according to a second embodiment of the present invention; Fig. 14 shows an explanatory view of collation and extraction by an collation and extraction part; Fig. 15 shows an explanatory view of adjustment of amounts and conditions; Fig. 16 shows an explanatory and schematic view of a cash type system; and and Fig. 17 shows an explanatory and schematic view of a credit type system.

### BEST MODE FOR CARRYING OUT THE INVENTION

Preferred embodiments of an IC card and its controller, and a method for selection of an application for the IC card, according to the present invention are described below with reference to the drawings. However, the present invention is not limited by the following embodiments.

Fig. 1 shows an explanatory view of an IC card according to a first embodiment of the present invention. In an IC card 100, a plastic card 1 with a size of a credit card is provided with a dedicated one-chip microcomputer (IC) 2 comprising a CPU and EEPROM. The one-chip microcomputer 2 comprises an interface section 21 which transmits and receives data to and from other electronic money related devices, an application selection table 22 which stores selection standards for applications in a form of a table; an application selection section 23 which selects an application based on transaction amounts and the application selection table 22; an application storage unit 24 which selects various kinds of applications; and an amount identification section 25 which identifies amount information from R/W. The application selection table 22 includes application kinds, amounts and conditions for selection in a form of a table (see A in Fig. 1).

The IC card 100 is inserted into an R/W 51 for connection to an IC card controller 50, which comprises (not shown): a setting, a change, an inquiry and a delete functions for the application selection table 22, and a judgment function of amounts and conditions which are set in the application selection table 22. The controller 50 comprises: a memory 52 storing applications for setting amounts and conditions, which is provided for setting the amounts and conditions in the application selection table; an arithmetic and logic unit 53; a display device 54 such as a liquid crystal display; and an input device 55 such as a keyboard.

The IC card controller 50 may be a R/W, with a special telephone, a wallet, keys, a display, and so on, if it stores applications for setting the application selection table, though the R/W has not a form shown in Fig. 1.

Fig. 2 shows a flow chart for setting operation of the application selection table 22. Fig. 3 shows an explanatory view of setting operation of the application selection table 22, showing display screens on the display device 54.

At step S201, a main menu is displayed, and a "setting" command is selected ((a) in Fig. 3). The selection is performed by inputting of a number ("1" in the present case) with a keyboard 55. Thereafter, an application selection menu is displayed on the display screen.

At step S202, an application for which an amount and a condition are set is selected ((b) in Fig. 3). As types of applications, "credit type" and "cash type" are displayed on the display screen. When the "credit type" application is selected, a number "1" is input with the keyboard 55.

At step S203, the amount and the condition for the "credit type" application are set ((c) in Fig. 3). For example, it is assumed that "5000" (the unit is YEN(¥), and the same hereinafter) is set as the amount, and "or more" as the condition. The amount is set by direct input with the keyboard 55, and the condition by input of a number ("1" in the present case).

At step S204, set contents are confirmed on the screen. The contents set at step S203 are displayed on the screen ((d) in Fig. 3). A user pushes a confirmation key (enter key) 55a, if the contents on the display screen are correct, after checking them. Accordingly, setting of the application selection table for the "credit type" application is completed.

At step S205, selection is made to determine whether setting of the next application ("cash type") in the application selection table is required or not ((e) in Fig. 3). The confirmation key 55a is pushed, if required.

At step S206, an application for which an amount and a condition are set is selected ( (f) in Fig. 3). "Credit type" and "cash type" for selection of types of applications are displayed on the display screen. Now, a mark (a sign " 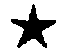 ") is displayed at the side of the characters "credit type", as the "credit type" has been already set at the preceding step. The user selects "cash type". For example, the user inputs a number "2" with the keyboard 55, when "cash type" is selected. Here, when "credit type" is selected, a modification menu of set contents (setting change will be described later) is displayed.

At step S207, an amount and a condition for the selected "cash type" are set ((g) in Fig. 3). For example, "5000" is set for the amount, and "less than" for the condition. The amount is set by direct input with the keyboard 55, and the condition by input of a number ("2" in the present case) . Here, the name of the application which has been already set, the amount, and the condition are displayed at the foot of the screen for reference.

At step S208, set contents are confirmed on the display screen. The contents set at step S207 are displayed on the display screen ((h) in Fig. 3). The user pushes the confirmation key 55a, if the contents on the display screen are correct, after checking them. Thereby, setting of the application selection table for the "cash type" application is completed.

As mentioned above, setting of the application selection table 22 is performed. Now, a case where there is caused an unset range or contradicted part in the amount ranges and the conditions during the setting step will be described. When there is caused an unset range or contradicted part in the amount ranges and the conditions, a notice "There is an unset parameter. Please perform setting." will be displayed, as shown in (a) of Fig. 4.

For example, when the amount and condition for the "credit type" application is set as "5000 or more", and those for the "cash type" application as "less than 3000", there is caused an unset range "between 3000 or more and less than 5000". In this case, when the "cash type" application is configured to be used for a range of "3000 or more, and less than 5000", the amount and the condition for the "cash type" one are "less than 5000".

Moreover, when there is caused any contradicted part, a notice "error" is displayed at step S207. For example, when the amount and the condition for the "credit type" application are configured as "5000 or more", and those for the "cash type" one as "less than 6000", there is caused a contradicted range of "between 5000 or more and less than 6000". In this case, a notice "There is contradiction in the parameters. Please perform resetting" is displayed, as shown in (b) of Fig. 4. After completion of the correct setting, the operation may be progress to step S208. In this embodiment, if the amount and the condition for the "cash type" application are assumed to be "less than 5000", there is eliminated the contradicted part.

The setting change of the application selection table will be described. Fig. 5 shows a flow chart for setting change of the application selection table. Fig. 6 shows an explanatory view of setting change of an application selection table.

At step S501, a "change" command is selected on the main menu, and the menu on the display screen is changed to the application selection table setting change menu (See (a) in Fig. 3). When the "change" command is selected, the name of the application for which setting of the application selection table is under way is displayed. Here, "credit type" and "cash type" are displayed ((a) of Fig. 6).

For example, when "credit type" is selected, a number "1" is input with the keyboard 55. Thereby, it is possible to perform setting change of the application selection table 22, and the current status for the "credit type" is displayed on the display screen ((b) in Fig. 6). Here, the name of the application which has been already set and is not an object for the modification at the moment, the amount, and the condition are displayed at the foot of the screen for reference.

At step S502, modification of the amount and the condition is performed. For example, the amount is modified from "5000" to "8000" ((c) in Fig. 6). The condition is kept the same. The amount is set by direct input with the keyboard 55.

At step S503, a notice, "There is an unset table range. Please perform setting of the cash type" is displayed on the display screen ((d) in Fig. 6), as there is caused an unset range by the modification. Moreover, when there is generated a contradicted part, not the unset range, a notice "There is a contradicted part. Please perform resetting of the cash type" is displayed (not shown). Here, the name of the application which has been already modified at the preceding step, the amount, and the condition are displayed at the foot of the screen for reference.

At step S504, setting change of the application selection table 22 is performed. Specifically, the amount and the condition of the "cash type" are modified to "less than 8000" ((e) in Fig. 6), as a range "between 5000 or more and less than 8000" is unset.

At step S505, updating of the modification is performed. The amount and the condition after setting change are displayed on the display screen ((f) in Fig. 6). The user pushes the confirmation key 55a, if the contents on the display screen are correct, after checking them. Thereby, setting change of the application selection table 22 for the "credit type" and "cash type" applications is completed.

Now, an "inquiry" command is selected in the main menu, when inquiry of the application selection table 22 is performed ((a) in Fig. 3). Then, the menu on the display screen is changed to an inquiry menu of the application selection table (See Fig. 7). Now, the current status of the application selection table is displayed on the display screen. Specifically, notices "credit type 8000 or more", and "cash type less than 8000" are displayed on the display screen.

Deletion of the application selection table 22 will be described. Fig. 8 shows an explanatory view of deletion of the application selection table 22. When a "delete" command is selected on the main menu (See (a) in Fig. 3), the menu on the display screen is changed to a deletion menu of the application selection table (See (a) in Fig. 8). The name of the application for which setting of the application selection table is under way is displayed on the display screen.

Here, notices "credit type" and "cash type" are displayed ((a) in Fig. 8). For example, when "cash type" is deleted, a number "2" is input with the keyboard 55. Thereby, a content for confirmation of the deletion of the application selection table is displayed (See (b) in Fig. 8). Specifically, a notice "Is it possible to delete "cash type less than 8000"?" is displayed.

The user pushes the confirmation key 55a after checking the contents on the display screen. Thereafter, setting of the application selection table 22 for the "cash type" is deleted. Accordingly, the content on the display screen is changed to a content for confirmation of another deletion of setting of the application selection table. If any deletion required, the contents on the screen is returned to the deletion menu of the application selection table by pushing the confirmation key 55a. If no deletion required, "N" is input to complete the operation.

As mentioned above, the amounts and conditions for the applications of "credit type" and "cash type" are stored in the application selection table 22 of the IC card 100 in correspondence with each other. Specifically, they are stored in a form of a table, as shown in A of Fig. 1.

A method for use of the IC card 100 will be described. Generally, a R/W of the IC card 100 is built into POS terminals and so on at stores. When a user uses electronic money for payment of the price for the goods at a store, the IC card 100 is handed to a store associate. The store associate inserts the IC card 100 into the R/W. The IC card 100 after obtaining amount information from the R/W performs selection of the application, based on the amount information. For example, in the case of payment of ¥3000, the "cash type" application is activated after selection of the application by the application selection section 23, as-the "cash type" application is configured to be selected when the amount is less than ¥5000. Then, the payment with the electronic money is performed according to the "cash type".

With the IC card 100, there is no need to give information on an application to be used to a store associate by verbal communication, as the application is automatically determined according to the amount. Therefore, leaking of information on the application under use to persons around the user may be prevented and selection miss of the applications may be avoided due to automatic selection of applications. Moreover, more quick payment may be performed.

Further, the automatic selection of applications may cause more prompt processing at the following scene. Fig. 9 shows an explanatory view of a case where payment of fares for railways is performed by using the IC card 100. Though smooth passing through ticket gates may be possible with use of prepaid cards, or commutation tickets , it is difficult to supply money to the prepaid cards, and, accordingly, the cards are required to often be purchased. Further, it is not possible to use the commutation ticket for riding sections, other than a predetermined riding one.

Therefore, when a user U is provided with the IC card 100; the R/W is installed at a ticket gate G; and the automatic selection of applications is possible, it may be possible to quickly pass through a ticket gate at any riding sections. At passing-through the ticket gate, the IC card side 100 performs the selection of applications, as described above. For example, when the fare is assumed to be ¥180, the payment is completed after selection of the "cash type" application.

Fig. 10 shows an explanatory view of a case where payment of highway charges is performed by using the IC card 100. A car C has temporarily stopped at a toll gate G mainly for cash payment, there has been a problem causing traffic jams due to the troublesome payment. Moreover, heavy personnel expenses are incurred, as a toll collector is needed in each collection box at the toll gate G. Therefore, the payment at the toll gate is configured to be performed using the IC card 100.

In the first place, a R/W with a transmitter T is installed in a car, and an IC card 100 is kept being inserted to the R/W. The transmitter T is connected to an antenna N outside the car. A sending and receiving device R is installed at the toll gate G. When a car C passes through the toll gate G, there is communication between the transmitter T and the sending and receiving device R. During the above, automatic selection of applications is performed. For example, when a highway charge is ¥8000, a "credit type" application is selected, and the payment is completed.

Moreover, though there is two types of applications of a "credit type" and a "cash type" in this embodiment, there may be configured to be three types of applications. The application selection table 22 for this case is shown in Fig. 11. In this figure, the amount and the condition for "the second credit type" are "between 5000 or more, and less than 8000", where the amount and the condition for the upper limit and the lower one are displayed in two rows, as shown in Fig. 12. Description of other points for setting is eliminated, as they are similar to those of the above. And, cases with more than four applications are similar to the above.

Fig. 13 shows an explanatory view of the IC card according to a second embodiment of the present invention. Generally, the application which a store has joined is not always in coincidence with the one of the IC card. In such a case, even if the IC card is provided with an amount range and a condition, the card is not useful when the ones of the IC card side is not corresponding to an application of the store, and the application of the IC card side can not be used at the store. The IC card 200 according to the second embodiment is characterized in that it is configured to perform comparison and collation of the applications of the IC card with the applications of the store side, extraction of the common applications, and adjustment of the amounts and conditions.

The above IC card 200 comprises a collation extraction section 201 which performs collation of applications of the store side which may be used with the R/W with the ones of the IC card side, and to extract the common applications; an amount and condition adjustment section 202 which adjusts the amounts and the conditions. Other configurations are similar to those of the IC card according to the first embodiment. Accordingly, the description will be eliminated.

In the first place, the IC card 200 performs collation of the applications for extraction of the common applications . Thereby, the applications for which the user has contracted may be used (but, when there is no common application, it is impossible to perform the payment by the electronic money).

There may be a possibility that there are caused unset ranges in the amount and condition ranges so as to set the first embodiment, even if the common application is extracted. For example, when it is impossible to extract the due application for the range between ¥3000 or more and less than ¥5000 after the collation, there may be an unset range between them. Therefore, it is required to adjust the unset parameters. For example, the range between ¥3000 or more and less than ¥5000 is configured to be built into another application. Hereinafter, the collation and extraction result and the adjustment of the amount and condition will be concretely described.

Fig. 14 shows an explanatory view of collation and extraction by the collation and extraction part. In the first place, R/W 1 through R/W 3 are the R/Ws which are used at each store. The R/W1 of the store 1 may deal applications (APL) 1, and APL2. The R/W 2 of the store 2 may deal applications APL2 through APL5. The R/W 3 of the store 3 may deal applications APL2 and APL4. On the other hand, the IC card 200 may deal applications APL1 through APL4.

For example, when a user performs payment of the price for the goods at a store 1, the IC card 200 is inserted into a R/W 250 first, and the collation extraction section 201 performs collation of the applications with each other. As the store 1 may deal the applications APL1 and APL2, and the IC card 200 the ones APL1 through APL4, the common applications are the ones APL1 and APL2. The collation extraction section 201 extracts the common applications APL1 and APL2.

Similarly, as the store 2 may deal the applications APL2 through APL5, and the IC card 200 the ones APL1 through APL4, the common applications are the ones APL2 through APL4. The collation extraction section 201 extracts the common applications APL2 through APL4. And, similarly, as the store 3 may deal the applications APL2 and APL4, and the IC card 200 the ones APL1 through APL4, the common applications are the ones APL2 and APL4. The collation extraction section 201 extracts the common applications APL2 and APL4.

Fig. 15 shows an explanatory view of adjustment of amounts and conditions. It is assumed that the amounts and conditions are set in the IC card 200 side as follows; "less than 1000" for APL1, "between 1000 or more and less than 5000" for APL2, "between 5000 or more and less than 10000" for APL3, and "less than 10000" for APL4 (See the steps S201 through S208 for the setting) . Moreover, in this case, R/W 1 of the store 1 may deal applications APL1 and APL2, as shown in the above. In such a case, the unset ranges (where any APLs may not be used) are the range of APL3 of "between 5000 ormore, and less than 10000", and the one of APL4 "10000 or more".

Therefore, the ranges of APL3 and APL4 are configured to be built into the range of APL2 which has an amount continuity with them. Thereby, the range of APL2 is changed to "1000 or more". The standard used for the adjustments is "amount continuity", and, an APL may be defined as a standard one, and other ones may be built into the standard one. For example, APL1 is set as a standard APL, and the ranges of the APL3 and APL4 may be built into the range of the APL1. In the case, the range of APL1 is "less than 1000, and 5000 or more ", and the one of APL2 "between 1000 or more and less than 5000".

Similarly, R/W 2 of the store 2 may deal applications APL2 through APL4 for the IC card 200, as shown in the above. In such a case, the unset range is the range of APL1 of "less than 1000". Therefore, the range of APL1 is built into the range of APL2 which has an amount continuity with it. As a result, the range of APL2 is changed to "less than 5000". Similarly, R/W 3 of the store 3 may deal applications APL2 and APL4 for the IC card 200, as shown in the above.

In such a case, the unset ranges are the range of APL1 of "less than 1000", and the one of APL3 "10000 or more". Therefore, the range of APL1, which is the lower amount side of the range of APL2, is built into the range of APL2 which has an amount continuity with it, and the range of APL3, which is the lower amount side of the range of APL4, is built into the range of APL4 which has an amount continuity with it. Thereby, the range of APL2 is changed to "less than 5000", and the one of APL4 "5000 or more".

Though "There is amount continuity", "Built into the range of the standard APL", and "There is amount continuity, and it is the lower amount side", are used as an adjustment standard for the amounts and conditions in the above, the present invention is not limited to the above. For example, "There is amount continuity, and it is the higher amount side" and so on may be used as an adjustment standard.

Moreover, the combinations of all the patterns may be set in the IC card 200, and the same patterns as the extracted applications may be used for application retrieval. For example, there are conceived 24 kinds of combinations, as the IC card 200 may deal the applications APL1 through APL4. Therefore, all the patterns for extracted APL may be dealt, when the ranges of the amounts and conditions are previously set, corresponding to the 24 kinds of APL combinations. In addition, it is also possible to cancel transactions without adjusting the unset ranges.

As described above, automatic selection of applications with the IC card 200, even when the applications of the store side is not completely corresponding to the ones of the IC card 200. Therefore, leaking of information on the applications under use to persons around the user may be prevented and payment with shorter time may be realized.

Furthermore, according to the IC card of the present invention, data are transmitted and received to and from external devices, respectively, by the interface section; a plurality of applications necessary for monetary transactions are stored; the applications are provided with amount ranges to be used, and they are stored in a form of a table; amount information sent from the external devices is identified; and a specified application is automatically selected based on the identified amount information, and the amount ranges in a form of a table. Therefore, leaking of information on the applications under use to persons around the user may be prevented and selection miss of the applications may be avoided due to automatic selection of applications. Moreover, there is an effect that more quick payment may be performed.

Moreover, according to the controller of the present invention, it is configured that the IC card side performs selection of any one of applications based on the amount information sent from the external devices according to the amount ranges with which each application is provided. Therefore, leaking of information on the applications under use to persons around the user may be prevented and selection miss of the applications may be avoided due to automatic selection of applications. Moreover, there is an effect that more quick payment may be performed.

According to the controller of the present invention, there is provided an amount range judgment section which detects blank ranges between the amount ranges, and contradictions between the amount ranges at provision of each application with the amount ranges. Therefore, there is an effect that inability to select applications due to setting of contradicted amount ranges may be prevented.

Furthermore, according to the IC card of the present invention, it is configured that collation of the applications of the external device sides and the ones of the IC card sides with each other; extraction of the common applications may be performed; and elimination of blank amount sections by adjusting the amount ranges with which each application is provided are configured to be performed. Therefore, there is an effect that inability to select applications may be prevented.

Moreover, according to the application selection method of the IC card of the present invention, it is configured that a plurality of applications necessary for monetary transactions are stored in the IC card side; the applications are provided with amount ranges; the amount information sent from the external devices is identified in the IC card side; and specified applications are selected based on the identified amount information, and the amount ranges. Therefore, there is an effect that leaking of information on the applications under use to persons around the user may be prevented. And, the automatic selection of applications may cause prevention of selection miss . In addition, there is an effect that quick payment may be performed.

Further, according to the application selection method of the IC card of the present invention, it is configured that due applications may be selected after a step to perform collation of the applications of the external device sides and the ones of the IC card side with each other, and to extract the common applications, and a step to adjust the amount ranges with which each extracted application is provided, and to eliminate blank amount sections. Therefore, there is an effect that inability to select applications may be prevented.

### INDUSTRIAL APPLICABILITY

The IC card, and its controller, and the selection method of the IC card application is suitable for prevention of leaking of information on the applications under use to persons around the user; avoidance of selection miss of the applications, and more quick payment of monetary transactions.

## Claims

1. An IC card comprising:
an interface unit which transmits and receives data to and from an external device;
an application storage unit which stores a plurality of applications necessary for operations between said external device;
an application selection table which stores applications and conditions for selection of each application in correspondence with each other;
a condition identification section which identifies data, which are conditions for selection, from data sent from said external device; and
an application selection section which selects an application to be selected from identified conditions and said application selection table.

2. An IC card comprising:
an interface section which transmits and receives data to and from an external device;
an application storage unit which stores a plurality of applications necessary for monetary transactions;
an application selection table which stores applications and amount ranges to be used in correspondence with each other;
a condition identification section which identifies amount information sent from said external device; and
an application selection section which selects an application in correspondence with the amount range including the identified amount information, based on said application selection table.

3. A controller used for an IC card, which controller stores a plurality of applications for execution of monetary transactions, said controller comprising:
an application selection table setting unit which gives the amount range used for selection of any one of said applications to said IC cards for every application,
wherein it is possible to select any one of the applications based on the amount information sent from an external device at the IC card side depending upon the amount range.

4. The controller according to claim 3 further comprising an amount range judgment unit which detects blank ranges between amount ranges, and contradictions between amount ranges at provision of each application with the amount ranges.

5. The IC card according to claim 1 further comprising:
a collation extraction unit which performs collation of the applications of said external device with those of the IC card side, and extracts common applications; and
an amount range adjustment unit which adjusts the amount ranges with which each extracted application is provided, and eliminates the blank ranges between the amount ranges,
wherein each of the extracted applications is configured to be provided with the amount ranges after the adjustment.

6. A method for selecting IC card applications comprising the steps of:
storing a plurality of applications to execute monetary transactions in an IC card;
previously provided amount ranges to be used with each application;
identifying an amount information input by an external device by said IC card; and
selecting specific applications based on the amount information and the amount ranges.

7. The method according to claim 6 further comprising a step of
collating of the applications of said external device with those of said IC card and thereby extracting common applications;
adjusting the amount ranges with which each extracted application is provided, and to eliminate blank ranges between the amount ranges; and
selecting the application.
